**Europäisches Patentamt**

**European Patent Office**

**Office européen des brevets**

(19)

(11) Veröffentlichungsnummer: **0 189 414 B1**

# EUROPÄISCHE PATENTSCHRIFT

(12)

(45) Veröffentlichungstag der Patentschrift: 23.05.90

(21) Anmeldenummer: **84904064.7**

(22) Anmeldetag: **06.11.84**

(86) Internationale Anmeldenummer:
**PCT/AT84/00041**

(87) Internationale Veröffentlichungsnummer:
**WO 85/02266 23.05.85 Gazette 85/12**

(51) Int. Cl.⁵: **G 01 S 13/95,** G 01 N 22/00,
G 01 W 1/00

(54) **VERFAHREN ZUR MESSUNG WETTERBEDINGTER ZUSTANDSÄNDERUNGEN AN DER OBERFLÄCHE VON VERKEHRSFLÄCHEN UND VORRICHTUNG ZUM DURCHFÜHREN DES VERFAHRENS.**

(30) Priorität: **07.11.83 AT 3907/83**

(43) Veröffentlichungstag der Anmeldung:
**06.08.86 Patentblatt 86/32**

(45) Bekanntmachung des Hinweises auf die
Patenterteilung:
**23.05.90 Patentblatt 90/21**

(84) Benannte Vertragsstaaten:
**AT BE CH DE FR GB LI LU NL SE**

(56) Entgegenhaltungen:
**US-A-3 665 466     US-A-4 052 666
US-A-3 836 846**

**IEEE Transactions on Geoscience Electronics Band GE-17, Nr. 3, Juli 1979, New York (US) R.G. Onstott et al.: "Surface-based Scatterometer Results of Arctic Sea Ice" Seiten 78-85, IEEE Transactions on Antennas and Propagation, Band AP-22, Nr. 2, März 1974, New York (US); Fawwaz T. Ulaby: "Radar Measurement of Soil Moisture Content", Seiten 257-265,**

(73) Patentinhaber: **GESIG GESELLSCHAFT FÜR SIGNALANLAGEN GESELLSCHAFT M.B.H.
Wattgasse 20
A-1160 Wien (AT)**

(72) Erfinder: **STÖRI, Herbert Institut für allgemeine Physik
der Technischen Universität Wien
Karlsplatz 13 A-1040 Wien (AT)**
Erfinder: **SÖLLNER, Erich Institut für allgemeine Physik
der Technischen Universität Wien
Karlsplatz 13 A-1040 Wien (AT)**
Erfinder: **BRAUN, Peter Institut für allgemeine Physik
der Technischen Universität Wien
Karlsplatz 13 A-1040 Wien (AT)**

(74) Vertreter: **Weinzinger, Arnulf, Dipl.-Ing. et al
Riemergasse 14
A-1010 Wien (AT)**

EP 0 189 414 B1

Courier Press, Leamington Spa, England.

**Beschreibung**

Die Erfindung bezieht sich auf ein Verfahren zur Messung der Dicke einer sich auf einer Bodenverkehrsfläche bildenden Wasserschicht, bei dem auf die zu überwachende Bodenverkehrsfläche eine Mikrowellenstrahlung gerichtet wird, und ein von der bestrahlten Fläche reflektierter Anteil der Mikrowellenstrahlung zur Gewinnung einer Aussage über die Schichtdicke gemessen und ausgewertet wird. Weiter bezieht sich die Erfindung auf eine Meßanordnung zur Durchführung eines solchen Verfahrens.

Es ist bekannt die Messung der Wasserhöhe auf Fahrbahnoberflächen entweder durch am Fahrbahnrand aufgestellte Regenmesser oder durch Sonden in der Fahrbahn vorzunehmen, die auf Änderungen der elektrischen Leitfähigkeit durch Feuchtigkeit oder Wasserbedeckung ansprechen. Erstere haben den Nachteil, daß sie den Straßenzustand nur am Fahrbahnrand und nicht in der Fahrspur anzeigen können (die Fahrspur trocknet wesentlich rascher auf), während beim letzteren Prinzip aufwendige, teure und verkehrsbehindernde Eingriffe in der Fahrbahn notwendig sind und die Leitfähigkeitssonden überdies einer starken Abnützung durch den Fahrzeugverkehr unterworfen sind. Es ist beim letztgenannten Prinzip auch nachteilig, daß die von solchen Meßsonden erfaßte Meßfläche verhältnismäßig klein ist. Dieser Nachteil der Kleinheit der Meßfläche sowie der Nachteil, daß es zum Einbau der Meßeinrichtung teurer und verkehrsbehindernder Eingriffe in die Fahrbahn bedarf, ist auch bei der aus der US—A—3 836 846 bekannten Technik gegeben, bei der in einer auf das Vorliegen einer Wasserschicht zu überwachenden Straßenfläche ein Unterflurraum vorgesehen wird, in dem ein Mikrowellensender und ein Mikrowellenempfänger sowie Mikrowellenübertragungseinrichtungen untergebracht werden, und solcherart Mikrowellenenergie von unten durch einen Hohlleiter gegen ein im Straßenflächenniveau liegendes Fenster, das den Unterflurraum nach oben abschließt, gerichtet wird, wobei beim Vorliegen einer Wasserschicht auf diesem Fenster ein Teil der Mikrowellenenergie an der Wasserschicht reflektiert und in den Hohlleiter zurückgeworfen wird, an den auch der diese Reflexion erfassende Mikrowellenempfänger angeschlossen ist. Es verursacht der bei dieser Technik erforderliche Unterflureinbau der erforderlichen Einrichtungen einen großen Aufwand, und es wird durch die Kleinheit der Meßfläche keine zuverlässige Aussage über die auf der Straßenoberfläche vorliegenden Verhältnisse erzielt. Es ist weiter in der US—A—4 052 666 eine verhältnismäßig komplizierte Technik zur Bestimmung der Wuchshöhe und des Wassergehaltes einer bodenbedeckenden Vegetationsschicht beschrieben; bei dieser Technik wird eine zirkularpolarisierte Mikrowellenstrahlung von oben her auf die zu untersuchende Vegetationsschicht gerichtet, und es wird die von der Oberseite der Vegetationsschicht und die von der Oberseite des bewachsenen Bodens reflektierte Strahlung erfaßt und hieraus durch ellipsometrische Auswertung eine Aussage über Wuchshöhe und Wassergehalt der Vegetation gewonnen. Es liegen dabei hinsichtlich der Dicke der zu messenden Schicht und hinsichtlich der Größe und des Einflusses der Bodenunebenheiten wesentlich andere Verhältnisse vor, als beim Auftreten von Wasserschichten auf Bodenverkehrsflächen.

Es kann auch erwähnt werden, daß es bekannt ist, den Wasser- oder Feuchtigkeitsgehalt von handhabbaren Warenbahnen oder Probenvoluminia mit Mikrowellen zu bestimmen. Dabei wird einerseits die Änderung der Durchlässigkeit bei Änderung des Wassergehaltes bestimmt, als auch andererseits das sich dabei ändernde Reflexionsvermögen der Oberfläche des Prüfgutes zur Messung verwendet. Diese Verfahren sind entweder nicht für solche Prüfgüter anwendbar, an deren Oberfläche sich ein Wasserfilm bildet—der das Meßergebnis völlig verfälscht—, oder umgehen diese Schwierigkeiten durch Berühren des Prüfgutes mit ihrer Auskoppelöffnung.

Ziel der Erfindung ist es, eine einfache, zuverlässige und gegenüber Störeinflüssen unempfindliche Technik zu schaffen, mit der die Dicke einer sich auf einer Bodenverkehrsfläche wetterbedingt bildenden Wasserschicht meßtechnisch rasch erfaßbar ist.

Das erfindungsgemäße Verfahren eingangs erwähnter Art ist dadurch gekennzeichnet, daß zur Bestrahlung der zu überwachenden Bodenverkehrsfläche Mikrowellenstrahlung verwendet wird, welche in einer vorgegebenen Richtung linear polarisiert ist und welche unter einem schrägen Einfallswinkel von oben auf die Fläche gerichtet wird, und bei der Messung des reflektierten Anteils lediglich Mikrowellenstrahlung der vorgegebenen Polarisationsrichtung erfaßt wird. Durch dieses Verfahren kann der vorgenannten Zielsetzung gut entsprochen werden. Die erfindungsgemäße Technik gestattet es die Bildung und Höhe von Wasserschichten auf Fahrbahnoberflächen auf einfache Weise berührungslos meßtechnisch zu erfassen, wobei die Höhe von Wasserschichten von einigen mm bis zu einigen cm Dicke bestimmt werden kann und auch bereits die Ausbildung eines Wasserfilms auf der Fahrbahn betriebssicher festgestellt werden kann.

Es ist für die Erfassung und Verarbeitung der Meßwerte eine Ausführungsform des erfindungsgemäßen Verfahrens günstig, welche dadurch gekennzeichnet ist, daß auf die zu überwachende Fläche eine modulierte Mikrowellenstrahlung gerichtet wird, und daß das durch Demodulation der reflektierten Mikrowellenstrahlung erhaltene Meßsignal einer Bandpaß- und/oder Tiefpaßverstärkung unterworfen wird. Es ist weiter vorteilhaft, daß eine im X-Band-Frequenzbereich liegende Mikrowellenstrahlung eingesetzt wird. Weiter sieht eine für die Meßwertverarbeitung günstige, bevorzugte Ausführungsform vor, daß Meßwerte, welche außerhalb des durch wetterbedingte Zustandsänderungen gegebenen Meßwertbereiches liegen und von Reflexionen der Mikrowellenstrahlung an Fahrzeugen herrühren, mittels einer Schaltungs-Logik ausgeblendet werden.

Die erfindungsgemäße Meßanordnung mit einem Mikrowellensender zur Beaufschlagung der zu überwachenden Bodenverkehrsfläche mit einer Mikrowellenstrahlung, einem Mikrowellenempfänger zur Erfassung eines Anteils der von der bestrahlten Fläche reflektierten Mikrowellenstrahlung, sowie einer Auswerteschaltung zur Gewinnung einer Aussage über die Schichtdicke aus dem erfaßten reflektierten Anteil der Mikrowellenstrahlung ist dadurch gekennzeichnet, daß der Mikrowellensender mit Mitteln zur linearen Polarisation der Mikrowellenstrahlung in einer vorgegebenen Richtung ausgestattet und oberhalb der zu überwachenden Bodenverkehrsfläche so angeordnet ist, daß die Mikrowellenstrahlung unter einem schrägen Einfallswinkel auf diese Fläche auftrifft, und der Mikrowellenempfänger so angeordnet und ausgebildet ist, daß er lediglich denjenigen Anteil der unter einem vorgegebenen Winkel von der bestrahlten Fläche reflektierten Mikrowellenstrahlung erfaßt, der in der vorgegebenen Richtung polarisiert ist.

Es kann in der erfindungsgemäßen Meßanordnung zur Detektion der Wasserschicht mit einer einzigen in der Empfängerantenne angeordneten Diode, von der ein der reflektierten Strahlung entsprechendes Meßsignal abgenommen wird, das Auslangen gefunden werden.

Die bei der erfindungsgemäßen Meßanordnung vorgesehene Auswerteschaltung kann ein Anzeigegerät aufweisen bzw. an ein Anzeigegerät angeschlossen sein. Vorzugsweise wird ergänzend zu einem solchen Anzeigegerät oder anstelle eines solchen ein Rechner zum Erfassen von Änderungen der reflektierten Mikrowellenstrahlung durch Wettereinflüsse angeschlossen.

Die mit dem erfindungsgemäßen Verfahren erhaltenen Meßwerte können z.B. zur Warnung von Aquaplaningrisiko rechnerunterstützt zur Steuerung von Verkehrsleiteinrichtungen verwendet werden. Die Größe des beobachteten Meßfeldes auf der Fahrbahn (z.B. Fahrspur) kann ca. 1 bis 2 m² betragen und läßt sich durch die geometrische Anordnung und Formgebung der Mikrowellensender und -empfänger einstellen. Die für das erfindungsgemäße Verfahren einzusetzenden Vorrichtungen bzw. Meßanordnungen können auch auf Fahrzeugen angeordnet werden, um in den Fahrzeugen fortlaufend einen den Fahrbahnzustand kennzeichnenden Meßwert zur Verfügung zu haben, aus dem eine Warnung vor Aquaplaningrisiko hergeleitet werden kann.

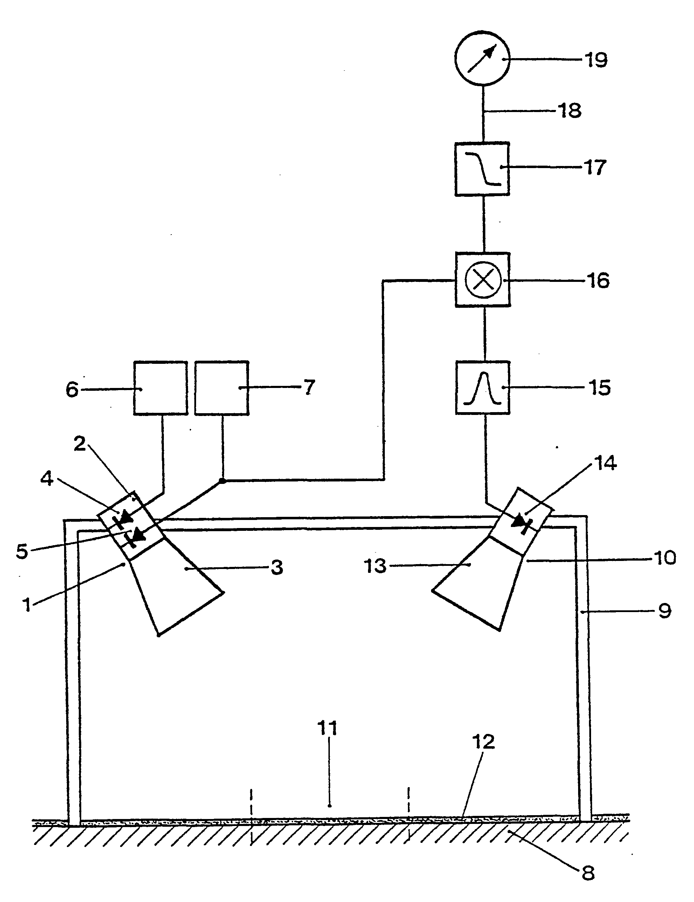

Die Erfindung wird nun unter Bezugnahme auf eine in der Zeichnung als Blockschaltbild schematisch dargestellte beispielsweise Ausführungsform einer erfindungsgemäßen Meßanordnung weiter erläutert.

Bei dieser Ausführungsform dient als Sender 1 ein Mikrowellen-Hohlraumresonator 2 mit Hornstrahler 3, der als Senderdiode eine Gunn-Diode 4 verwendet, die mit einer pin-Diode 5 moduliert werden kann. Der Spannungsregler 6 erlaubt die Einstellung des Arbeitspunktes. Da es sich um ein selbstschwingendes System handelt, ist kein Erregeroszillator notwendig, sondern nur der Modulationsoszillator 7. Der Mikrowellen-Sender 1 ist über der Fahrbahn 8, z.B. auf einer Signalbrücke 9 unter einem die Reflexion in dem Empfänger 10 ermöglichenden Winkel montiert und bestrahlt die Fahrbahnoberfläche auf der Prüffläche 11, auf der sich beispielsweise eine Wasserschicht 12 befindet, deren Höhe gemessen werden soll. Die Frequenz der linear polarisierten Mikrowellen ist unkritisch, da nicht mit Resonanzabsorption gemessen wird, und liegt im X-Band.

Der in einem bestimmten Abstand ebenfalls auf der Signalbrücke 9 angebrachte Mikrowellen-Empfänger 10 mit Hornantenne 13 hat keinen Resonator, sondern nur eine Empfänger-Diode 14. Diese Diode est parallel zur Polarisationsrichtung des Senders angeordnet. Das vom Empfänger gelieferte Signal wird von einem Verstärker mit Bandpaßfilter 15 weiterverarbeitet, der nur im Bereich der Modulationsfrequenz empfindlich ist; über einen Synchron-Demodulator 16 (Lock-in-Technik) wird Gleichspannung erzeugt, die von einem Verstärker mit Tiefpaßfilter 17 zur Unterdrückung von Oberwellen nochmals verstärkt wird. Das am Ausgang vorliegende Signal 18 kann direkt zur Anzeige der Wasserhöhe auf einem Anzeigeinstrument 19 oder zur Weiterverarbeitung für einen Rechner verwendet werden. Unerwünschte Meßwerte aufgrund durchfahrender Fahrzeuge können durch eine zusätzliche Schaltungslogik ausgeblendet werden.

Mit einer praktisch ausgeführten Ausführungsform einer erfindungsgemäßen Meßanordnung, welche im Empfänger für die reflektierte Mikrowellenstrahlung eine Diode aufwies, wurden nachstehende Meßwerte (willkürliche Anzeigeeinheiten) festgestellt:

| | | |
|---|---|---|
| Trockenheit | | 22 |
| Schichthöhe (Wasser) | | |
| 1 mm | ca. | 30 |
| 2 mm | | 35 |
| 3 mm | | 40 |
| 5 mm | | 60 |

**Patentansprüche**

1. Verfahren zur Messung der Dicke einer sich auf einer Bodenverkehrsfläche bildenden Wasserschicht, bei dem auf die zu überwachende Bodenverkehrsfläche eine Mikrowellenstrahlung gerichtet wird, und ein von der bestrahlten Fläche reflektierter Anteil der Mikrowellenstrahlung zur Gewinnung einer Aussage über die Schichtdicke gemessen und ausgewertet wird, dadurch gekennzeichnet, daß zur Bestrahlung der zu überwachenden Bodenverkehrsfläche Mikrowellenstrahlung verwendet wird, welche in einer vorgegebenen Richtung linear polarisiert ist und welche unter einem schrägen Einfallswinkel von oben auf die Fläche gerichtet wird, und bei der Messung des reflektierten Anteils lediglich Mikrowellenstrahlung der vorgegebenen Polarisationsrichtung erfaßt wird.

2. Verfahren nach Anspruch 1, dadurch gekennzeichnet, daß auf die zu überwachende Fläche
eine modulierte Mikrowellenstrahlung gerichtet
wird, und daß das durch Demodulation der reflektierten Mikrowellenstrahlung erhaltene Meßsignal einer Bandpaß- und/oder Tiefpaßverstärkung unterworfen wird.

3. Verfahren nach Anspruch 1 oder 2, dadurch
gekennzeichnet, daß eine im X-Band-Frequenzbereich liegende Mikrowellenstrahlung eingesetzt
wird.

4. Verfahren nach einem der Ansprüche 1 bis 3,
dadurch gekennzeichnet, daß Meßwerte, welche
außerhalb des durch wetterbedingte Zustandsänderungen gegebenen Meßwertbereiches liegen
und von Reflexionen der Mikrowellenstrahlung
an Fahrzeugen herrühren, mittels einer Schaltungs-Logik ausgeblendet werden.

5. Meßanordnung zur Durchführung des Verfahrens nach Anspruch 1, mit einem Mikrowellensender (1) zur Beaufschlagung der zu überwachenden Bodenverkehrsfläche (8, 11) mit einer
Mikrowellenstrahlung, einem Mikrowellenempfänger (10) zur Erfassung eines Anteils der von
der bestrahlten Fläche (11) reflektierten Mikrowellenstrahlung, sowie einer Auswerteschaltung (15,
16, 17, 19) zur Gewinnung einer Aussage über die
Schichtdicke aus dem erfaßten reflektierten Anteil
der Mikrowellenstrahlung, dadurch gekennzeichnet, daß der Mikrowellensender (1) mit Mitteln zur
linearen Polarisation der Mikrowellenstrahlung in
einer vorgegebenen Richtung ausgestattet und
oberhalb der zu überwachenden Bodenverkehrsfläche so angeordnet ist, daß die Mikrowellenstrahlung unter einem schrägen Einfallswinkel
auf diese Fläche auftrifft, und der Mikrowellenempfänger (10) so angeordnet und ausgebildet
ist, daß er lediglich denjenigen Anteil der unter
einem vorgegebenen Winkel von der bestrahlten
Fläche (11) reflektierten Mikrowellenstrahlung
erfaßt, der in der vorgegebenen Richtung polarisiert ist.

6. Meßanordnung nach Anspruch 5, dadurch
gekennzeichnet, daß die Antenne des Mikrowellensenders (1) ein Hornstrahler, insbesondere ein
Rechteck-Hornstrahler (3), ist.

7. Meßanordnung nach Anspruch 6, dadurch
gekennzeichnet, daß an den Hornstrahler (3) ein
Hohlraumresonator (2) angeschlossen ist, in dem
eine Oszillatordiode (4), welche vorzugsweise als
Gunn-Diode ausgebildet ist, und eine Modulatordiode (5), welche vorzugsweise als pin-Diode
ausgebildet ist, angeordnet sind.

8. Meßanordnung nach einem der Ansprüche 5
bis 7, dadurch gekennzeichnet, daß die an den
Ausgang des Mikrowellenempfängers (10) angeschaltete Auswerteschaltung eine auf die Modulationsfrequenz des Senders abgestimmte Band-
paßverstärkerstufe (15), einen Lock-In-Synchron-
Demodulator (16), dessen Bezugssignal einem
Modulator (7) des Senders (1) entnommen wird,
und vorzugsweise eine diesem Synchron-Demodulator (16) nachgeschaltete Tiefpaß-Verstärkerstufe (17), welche auch Gleichspannungssignale
verstärkt, aufweist.

**Revendications**

1. Procédé pour mesurer l'épaisseur d'une
couche d'eau qui se forme sur une surface de
circulation au sol, dans lequel on dirige un rayonnement micro-ondes sur la surface de circulation
au sol à surveiller, et on mesure et on exploite une
fraction du rayonnement micro-ondes réfléchie
par la surface irradiée pour obtenir une information sur l'épaisseur de la couche, caractérisé en ce
que pour irradier la surface de circulation au sol à
surveiller, on utilise un rayonnement micro-ondes
qui est polarisé de façon rectiligne dans une
direction prédéterminée et qui est dirigé sur la
surface à partir du haut sous un angle d'incidence
oblique, et en ce que lors de la mesure de la
fraction réfléchie, on ne capte que le rayonnement micro-ondes ayant la direction de polarisation prédéterminée.

2. Procédé selon la revendication 1, caractérisé
en ce qu'on dirige un rayonnement micro-ondes
modulé sur la surface à surveiller, et en ce que le
signal de mesure obtenu par démodulation du
rayonnement micro-ondes réfléchi est soumis à
une amplification passe-bande et/ou pas-bas.

3. Procédé selon la revendication 1 ou 2,
caractérisé en ce qu'on utilise un rayonnement
micro-ondes situé dans le domaine de fréquences
de la bande X.

4. Procédé selon l'une des revendications 1 à 3,
caractérisé en ce qu'on élimine au moyen d'un
circuit logique les valeurs de mesure qui se
trouvent en dehors du domaine de valeurs de
mesure donnée par les variations d'état dues aux
conditions météorologiques et provenant de
réflexions du rayonnement micro-ondes sur des
véhicules.

5. Installation de mesure pour la mise en application du procédé selon la revendication 1, comportant un émetteur micro-ondes (1) pour soliciter avec un rayonnement micro-ondes la surface
de circulation au sol à surveiller (8, 11), un
récepteur micro-ondes (10) pour capter une fraction du rayonnement micro-ondes réfléchie par la
surface irradiée (11), ainsi qu'un montage d'exploitation (15, 16, 17, 19) pour obtenir une information sur l'épaisseur de la couche à partir de la
fraction réfléchie et captée du rayonnement
micro-ondes, caractérisée en ce que l'émetteur
micro-ondes (1) est muni de moyens pour effectuer une polarisation rectiligne du rayonnement
micro-ondes dans une direction prédéterminée et
est disposé au-dessus de la surface de circulation
au sol à surveiller, de façon que le rayonnement
micro-ondes arrive sur cette surface sous un
angle d'incidence oblique, et en ce que le récepteur micro-ondes (10) est disposé et constitué
pour qu'il ne capte que la fraction du rayonnement micro-ondes réfléchie par la surface irradiée
(11) sous un angle prédéterminé, cette fraction
étant polarisée dans la direction prédéterminée.

6. Installation de mesure selon la revendication 5, caractérisée en ce que l'antenne de l'émetteur micro-ondes (1) est une antenne à cornet, notamment une antenne à cornet rectangulaire (3).

7. Installation selon la revendication 6, caractérisée en ce qu'un résonateur à cavité (2) est raccordé à l'antenne à cornet (3), une diode d'oscillateur (4), constituée de préférence d'une diode Gunn, et une diode de modulateur (5), constituée de préférence d'une diode p-i-n, étant disposées dans ce résonateur.

8. Installation de mesure selon l'une des revendications 5 à 7, caractérisée en ce que le montage d'exploitation raccordé à la sortie du récepteur micro-ondes (10) comporte un étage amplificateur passe-bande (15) accordé sur la fréquence de modulation de l'émetteur, un démodulateur synchrone à blocage (16) dont le signal de référence est prélevé dans un modulateur (7) de l'émetteur (1) et, de préférence, un étage amplificateur passe-bas (17) branché à la suite de ce démodulateur synchrone (16), cet étage amplifiant aussi les signaux de tension continue.

## Claims

1. A method of measuring the thickness of a layer of water forming on a ground traffic surface, in which method a microwave radiation is directed on to the ground traffic surface for monitoring, and a proportion of the microwave radiation reflected from the irradiated surface is measured and utilized to give information as to the thickness of the layer, characterised in that the microwave radiation used to irradiate the ground traffic surface for monitoring is linearly polarized in a predetermined direction and is directed from above on to the surface at an oblique angle of incidence, and only microwave radiation of the predetermined polarization direction is detected for measuring the reflected proportion.

2. A method according to claim 1, characterised in that a modulated microwave radiation is directed on to the surface for monitoring and in that the measurement signal obtained by demodulation of the reflected microwave radiation is subjected to band-pass and/or low-pass amplification.

3. A method according to claim 1 or 2, characterised in that a microwave radiation lying in the X-band frequency range is used.

4. A method according to any one of claims 1 to 3, characterised in that measurements which are outside the range of measurements resulting from weather-conditional changes of state and which originate from reflections of the microwave radiation from vehicles, are suppressed by a switching logic.

5. A measuring system for performing the method according to claim 1, comprising a microwave transmitter (1) for subjecting the ground traffic surface (8, 11) for monitoring to a microwave radiation, a microwave receiver (10) for detecting a proportion of the microwave radiation reflected by the irradiated surface (11), and an evaluation circuit (15, 16, 17, 19) to provide information as to the layer thickness from the detected reflected proportion of the microwave radiation, characterised in that the microwave transmitter (1) is provided with means for linear polarization of the microwave radiation in a predetermined direction and is so disposed above the ground traffic surface for monitoring that the microwave radiation impinges on said surface at an oblique angle of incidence, and the microwave receiver (10) is so disposed and constructed that it detects only such proportion of the microwave radiation reflected from the irradiated surface (11) at a predetermined angle as is polarized in the predetermined direction.

6. A measuring system according to claim 5, characterised in that the antenna of the microwave transmitter (1) is a horn radiator, more particularly a rectangular type horn radiator (3).

7. A measuring system according to claim 6, characterised in that a cavity resonator (2) is connected to the horn radiator (3) and contains an oscillator diode (4) preferably constructed as a Gunn diode, and a modulator diode (5) preferably constructed as a pin diode.

8. A measuring system according to any one of claims 5 to 7, characterised in that the evaluation circuit connected to the output of the microwave receiver (10) comprises a band-pass amplifier stage (15) tuned to the modulation frequency of the transmitter, a lock-in synchronous demodulator (16) whose reference signal is taken from a modulator (7) of the transmitter (1) and preferably a low-pass amplifier stage (17) which is connected to the output of said synchronous demodulator (16) and which also amplifies d.c. signals.